# DEMANDE DE BREVET EUROPEEN

(11) **EP 3 651 170 A1**
(43) Date de publication de la demande: **13.05.2020**
(21) Numéro de dépôt: 19204592.0
(22) Date de dépôt: 22.10.2019
(51) Int. Cl.: H01F 27/28, H01F 27/36, H01F 27/32, H01F 27/40, H02H 7/04, H02H 7/045

(54) **SYSTEME DE DETECTION ET DE LIMITATION DES EFFETS DE PERTE D'ISOLEMENT D'UN TRANSFORMATEUR ELECTRIQUE**

(30) Priorité: 08.11.2018 FR 1871454
(71) Demandeur: THALES, 92400 Courbevoie (FR)
(72) Inventeur: BIAUJAUD, Rémy, 78400 CHATOU (FR); MAIRIE, Mathieu, 78400 CHATOU (FR); MARIADASSOU, Prithu, 78400 CHATOU (FR); LACAUX, Frédéric, 78400 CHATOU (FR); ABDESSELAM, Francis, 78400 CHATOU (FR)
(74) Mandataire: Priori, Enrico

(57) **Abrégé**

Transformateur électrique (T) comprenant un premier enroulement, dit primaire (P), au moins un second enroulement, dit secondaire (S), des interrupteurs (INT), et un système de détection (DIS, SEC) de courant, caractérisé en ce qu'il comprend au moins un écran métallique (E) ayant un point de connexion relié à un potentiel neutre de l'enroulement primaire ou destiné à être relié à une masse électrique (ME) et placé entre l'enroulement primaire (P) et le au moins un enroulement secondaire (S), l'écran (E) étant réalisé en un matériau conducteur électrique ayant une température de fusion supérieure à celle des matériaux constituant les enroulements (P, S) ;
en ce que l'enroulement primaire (P) comprend une entrée destinée à être reliée à une source d'énergie externe (ALIM), les interrupteurs (INT) sont placés à l'entrée de l'enroulement primaire (P) de manière à pouvoir isoler l'enroulement primaire (P) de la source d'énergie externe (ALIM) et en ce que le système de détection (DIS, SEC) de courant est configuré pour détecter un courant à l'entrée de l'enroulement primaire (P) ou un courant au point de connexion et pour fermer ou ouvrir les interrupteurs (INT) en fonction de la détection du courant, le système de détection étant différentiel ou thermique.

## Description

L'invention concerne un système de détection et de limitation des effets de perte d'isolement d'un transformateur électrique dans un environnement critique dans lequel une rupture d'isolement d'un transformateur peut présenter un risque pour les personnes et les installations.

Un transformateur permet de convertir une source d'énergie électrique alternative en énergie magnétique et inversement, l'énergie convertie étant de même fréquence que l'énergie de la source initiale. Il est constitué d'enroulements primaire et secondaire qui ne présentent aucune liaison électrique entre eux, uniquement un couplage magnétique. Il est alimenté par une ou plusieurs tensions alternatives, appelées phases, chacune via un enroulement primaire qui constitue une entrée du transformateur. Un ou plusieurs enroulements secondaires constituent les sorties du transformateur. Un ensemble d'enroulements primaire et secondaire dépendant d'une même tension d'entrée est appelée bobine. Il y a donc autant de bobines que de phases en entrée du transformateur. Le transformateur permet d'échanger de l'énergie entre les enroulements primaires et les enroulements secondaires sans qu'ils aient à échanger des électrons grâce au couplage magnétique. Le passage par un support magnétique permet de créer un isolement galvanique entre l'énergie électrique traversant l'enroulement primaire et l'énergie électrique traversant l'enroulement secondaire, et d'élever ou d'abaisser les amplitudes des tensions ou courants entrant dans l'enroulement primaire et ressortant dans l'enroulement secondaire par le rapport de transformation du transformateur. Il peut également fournir le même niveau de tension ou courant entre l'entrée et la sortie du transformateur et juste servir d'isolement galvanique.

Cependant, si cet isolement galvanique disparaît, on parle de rupture d'isolement, les électrons peuvent circuler de l'enroulement primaire vers l'enroulement secondaire et le rapport de transformation du transformateur n'est plus garanti. Ainsi, la tension de l'enroulement secondaire peut, par exemple, dans le cas d'un transformateur abaisseur de tension, monter au-dessus de la tension pour laquelle les équipements, connectés au transformateur, sont conçus et entraîner leur destruction.

De plus, la rupture d'isolement peut être soudaine et indétectable, et dans les transformateurs actuels, utilisés par exemple en aéronautique, elle peut générer instantanément « un mode de défaillance redouté », comme l'augmentation de la tension dans les enroulements secondaires. Suite à une évolution des normes de protection, ce problème est récent dans l'aéronautique et il n'y a actuellement pas de solution permettant de ralentir et de détecter ce défaut d'isolement. Jusqu'à présent, ce défaut était admis d'un point de vue sécurité, mais il est maintenant considéré comme catastrophique. Cela signifie que ce défaut d'isolement n'est toléré que s'il n'apparaît qu'après un minimum de deux défaillances indépendantes, c'est-à-dire apparaître par exemple après une défaillance du bobinage du transformateur et une défaillance du contrôle de l'alimentation du transformateur.

Afin de limiter l'apparition du défaut de perte d'isolement, il est possible de prendre des précautions lors de la fabrication (contrôle des étapes de fabrication, propreté de la fabrication, etc) et d'insérer une ou plusieurs couches d'isolants thermiques, de type Kapton ou Nomex, entre les enroulements secondaire et primaire. Cela permet de ralentir les effets d'échauffement liés au défaut de perte d'isolement. Néanmoins, si ce défaut se produit, ces solutions ne sont pas capables de le ralentir suffisamment pour éviter qu'il ne se propage dans tous les enroulements, car les couches d'isolants vont se perforer et/ou fondre. De plus, aucune détection de ce défaut ne sera possible avec ces solutions passives pour couper l'alimentation électrique du transformateur défaillant avant que des tensions et/ou courants dangereux ne se propagent sur les équipements qui lui sont connectés.

L'invention vise à surmonter les inconvénients et limitations précités de l'art antérieur. Plus précisément, elle vise à ralentir l'effet d'une défaillance de bobinage pour que cette défaillance ne se transforme pas immédiatement en rupture d'isolement, et à mettre en place un moyen de détection permettant à un organe de coupure d'isoler le transformateur de sa source de tension électrique.

Un objet de l'invention est donc une bobine magnétique comprenant un premier enroulement, dit primaire ; et au moins un second enroulement, dit secondaire (S), caractérisé en ce qu'elle comprend également au moins un écran métallique, placé entre l'enroulement primaire et l'enroulement secondaire, l'écran étant réalisé en un matériau conducteur électrique ayant une température de fusion supérieure à celle des matériaux constituant l'enroulement primaire et l'enroulement secondaire.

Selon des modes de réalisation de l'invention :
- La bobine magnétique comprend deux enroulements secondaires et deux écrans métalliques, un premier des deux écrans est placé entre un premier des deux enroulements secondaires et l'enroulement primaire et le second des deux écrans est placé entre l'enroulement primaire et le second des deux enroulements secondaires, les deux écrans étant réalisés en un matériau conducteur électrique ayant une température de fusion supérieure à celle des matériaux constituant l'enroulement primaire et les enroulements secondaires ;
- L'écran et les enroulements primaire et secondaire sont concentriques ;
- Les enroulements primaire et secondaire sont juxtaposés sur une surface parallèle à un axe longitudinal de la bobine, l'écran étant perpendiculaire à cette surface ;
- L'enroulement primaire et l'enroulement secondaire sont réalisés en alliage d'aluminium et l'écran est réalisé en alliage de cuivre ;
- La bobine magnétique comprend également une première couche d'isolant thermique, intercalée entre l'enroulement primaire et l'écran, et une seconde couche d'isolant thermique, intercalée entre l'écran et l'enroulement secondaire, les matériaux constituant la première et la seconde couche d'isolant thermique étant résistants à une température supérieure à 400 °C ;
- Les deux couches d'isolant thermique (I1, I2) sont réalisées à base de polyimide et d'aramide ;
- Une épaisseur d'un empilement de couches comprenant les deux couches d'isolant thermique et l'écran est comprise entre 0,60 mm et 1 mm.

Un autre objet de l'invention est un transformateur électrique comprenant au moins deux bobines magnétiques selon l'invention, dans lequel les écrans métalliques des bobines sont reliés électriquement en série ou en parallèle.

Selon des modes de réalisation de l'invention :
- Les écrans sont reliés électriquement entre eux et au moins un des écrans est relié directement sans passer par les autres écrans électriquement à une masse électrique ou à un potentiel neutre de l'enroulement primaire ;
- Au moins un des écrans comprend deux connexions fixées à l'écran et distantes l'une de l'autre, une première des deux connexions étant reliée à un autre des écrans, une seconde des deux connexions étant reliée soit à encore un autre des écrans, soit à une masse électrique ou à un potentiel neutre de l'enroulement primaire, et dans ce cas la connexion électrique peut comprendre au moins une barre conductrice mise en contact électrique avec au moins un écran ; et
- Les enroulements primaires comprennent une entrée reliée à une source d'énergie externe, des interrupteurs placés aux entrées des enroulements primaires de manière à pouvoir isoler les enroulements primaires de la source d'énergie externe et un système de détection du courant détectant le courant à l'entrée des enroulements primaires ou le courant à la masse électrique et pouvant fermer ou ouvrir les interrupteurs, le système de détection étant différentiel ou thermique.

D'autres caractéristiques, détails et avantages de l'invention ressortiront à la lecture de la description faite en référence aux figures annexées données à titre d'exemple et qui représentent, respectivement :
- La figure 1, une coupe d'un transformateur selon un premier mode de réalisation de l'invention ;
- La figure 2, une coupe d'un transformateur électrique selon un second mode de réalisation de l'invention ;
- Les figures 3a et 3b, une vue de l'écran du transformateur éclaté selon respectivement un troisième mode et un quatrième mode de réalisation de l'invention ; et
- Les figures 4a et 4b, une coupe d'une bobine selon respectivement un cinquième mode et un sixième mode de réalisation de l'invention.

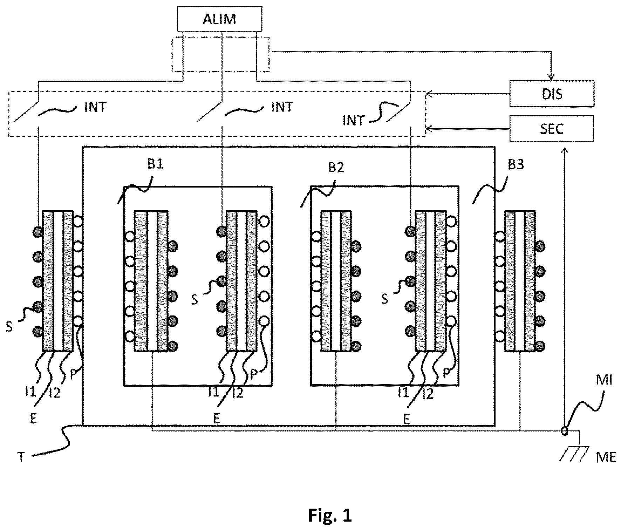

La figure 1 présente une coupe d'un transformateur T selon un premier mode de réalisation de l'invention. Le transformateur T est triphasé et il comprend donc trois bobines B1, B2 et B3. Chacune des bobines B1, B2 et B3 comprend un enroulement secondaire S, un enroulement primaire P et un écran métallique E. Dans ce premier mode de réalisation, l'écran E et les enroulements primaire P et secondaire S sont concentriques et l'écran E est intercalé entre les deux enroulements P et S.

Afin de résister plus longtemps à des températures élevées, et donc d'éviter la rupture d'isolement entre les enroulements primaire P et secondaire S, l'écran métallique E est réalisé en un matériau conducteur ayant une température de fusion supérieure à celle des matériaux composant les enroulements primaire P et secondaire S.

Une source d'énergie externe ALIM, reliée aux entrées du transformateur T, c'est-à-dire aux entrées des enroulements primaires P, permet d'alimenter le transformateur T. Des interrupteurs INT sont placés aux entrées des enroulements primaires P afin de pouvoir contrôler l'alimentation du transformateur T.

Les écrans E sont reliés ensemble en parallèle à la masse électrique ME. Un câble relie par exemple les écrans E entre eux ou une barre en cuivre brasée sur chacune de des sorties des écrans E et reliée à la masse ME permet par exemple de réaliser la mise en parallèle des écrans E.

Il est possible d'ajouter un système de détection DIS de courant qui permet de mesurer les courants et de contrôler l'ouverture et la fermeture des interrupteurs INT selon les valeurs de courant mesurées. Le système DIS est par exemple un système de détection différentiel qui va comparer les valeurs de courant en entrée des enroulements primaires P ou comparer en fonction du temps les valeurs de courant en entrée d'au moins un enroulement primaire. Si les valeurs de courant détectées sont différentes, le système va ouvrir les interrupteurs INT afin de couper l'alimentation du transformateur.

Le système DIS peut également être un système de détection thermique qui va ouvrir les interrupteurs INT quand le courant détecté en entrée des enroulements primaires P aura atteint une valeur d'intensité donné pendant un certain temps, ce qui équivaut à un échauffement. Ce type de système de détection thermique est, par exemple, un détecteur à fusible ou à bilames. Le système DIS peut, plus particulièrement, être un disjoncteur magnéto-thermique contenant des bilames qui vont s'enclencher dans les cas de court-circuit franc.

Un système de détection SEC différentiel peut également être présent pour détecter le courant arrivant à la masse ME et issu des écrans E (par exemple au point MI sur la figure 1), comparer en fonction du temps le courant détecté et agir sur l'ouverture et la fermeture des interrupteurs INT.

Afin de protéger l'écran E d'un arc électrique et/ou d'une forte élévation de température, suite par exemple à un court-circuit, l'écran métallique E peut être entouré de deux isolants thermiques I1 et I2. Les deux couches d'isolants thermiques I1 et I2 sont réalisés en un matériau pouvant résister à des températures supérieures à 400 °C, avantageusement ils peuvent résister à des températures de 500 à 600 °C.

Ainsi si un arc électrique apparaît et se propage de l'enroulement primaire P vers l'enroulement secondaire S (ou de l'enroulement secondaire S vers l'enroulement primaire P) d'une des bobines B1, B2 ou B3, l'arc électrique sera canalisé par les isolants I1 ou I2. Cela aura pour effet que l'arc ne se forme qu'entre les enroulements primaires P ou secondaires S et les isolants I1 ou I2, et non pas entre les enroulements primaires P ou secondaires S et un des écrans métalliques E et soit évacué vers l'extérieur des enroulements par les isolants I1 et I2. Si un arc se forme quand même entre un des enroulements et des écrans E, c'est-à-dire s'il y a contact entre l'enroulement secondaire S ou primaire P et l'écran E (par exemple parce que l'isolant s'est perforé ou parce que l'arc s'est accroché sur le flanc de la bobine), alors la source de tension ayant donné naissance à cet arc sera reliée à la masse électrique ME via l'écran E. Un courant de défaut, dit courant de fuite, va alors apparaître et circuler jusqu'à la masse ME et sera détecté par un des systèmes de détection du courant DIS ou SEC. Le système DIS ou SEC coupera alors l'alimentation électrique des enroulements en ouvrant les interrupteurs INT avant que l'arc électrique ne se propage plus au point de faire fondre les enroulements ou créer une liaison électrique entre l'enroulement primaire P et l'enroulement secondaire S.

Si un emballement thermique se produit, suite par exemple à une mise en court-circuit de plusieurs spires des bobines B1, B2 ou B3, les isolants I1 et I2 vont retarder la progression de la chaleur vers l'enroulement primaire P (ou secondaire S selon la localisation de ce défaut). La progression sera retardée jusqu'à ce que :
- soit le court-circuit provoqué engendre une consommation excessive en entrée de l'équipement, c'est-à-dire en entrée du transformateur T, et dans ce cas, le système de détection thermique du courant s'enclenche et isole l'équipement de l'alimentation ALIM en ouvrant les interrupteurs INT ;
- soit la température atteinte est si élevée que la chaleur traverse l'isolant I1 ou I2 et atteint l'écran E qui lui ne sera pas détruit car sa température de fusion est supérieure à celle des enroulements primaire et secondaire (en effet, si l'écran E fond, cela signifie que les enroulements ont déjà fondu et donc que le transformateur est déjà détruit, mais avec un tel niveau d'énergie, le dispositif de protection DIS ou SEC se sera déjà déclenché). Comme l'écran E est relié à la masse ME, un courant de fuite apparaîtra et donc le système de détection différentielle du courant viendra isoler l'équipement en défaut.

Il est donc possible de ralentir la propagation du défaut redouté, c'est-à-dire la rupture d'isolement, en assurer la détection, via des systèmes de protection externes, de la trop forte proximité entre haute et basse tension risquant de conduire très rapidement à la perte d'isolement et en coupant l'alimentation électrique du transformateur en défaut.

Afin de pouvoir supporter des courants de fuite élevés, la liaison électrique reliant les écrans E à la masse ME s'effectue avec des câbles de section suffisante et des bornes dimensionnées pour tenir ce courant.

L'épaisseur de l'écran E doit être suffisante pour qu'une défaillance du bobinage ne détruise pas l'écran. Cette épaisseur dépend de l'environnement dans lequel évolue le transformateur T ainsi que la puissance du transformateur T. L'épaisseur de l'écran E peut être validée par des essais.

Selon un autre mode de réalisation, les écrans ne sont pas reliés directement à la masse ME. Ils peuvent être reliés à la borne négative du transformateur T ou à la borne négative des équipements connectés au transformateur T ou être reliés à un connecteur dédié et ensuite reliés à une masse électrique à l'extérieur de l'équipement.

Selon un autre mode de réalisation, les écrans E sont mis à un potentiel électrique neutre de l'enroulement primaire P.

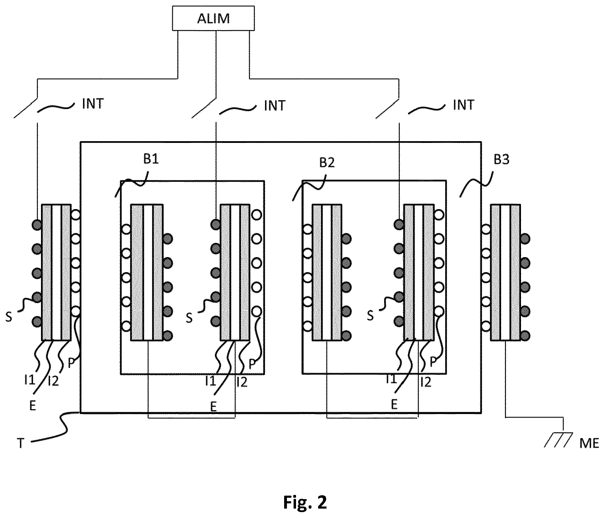

Selon un autre mode de réalisation, un second enroulement secondaire peut être présent sur les bobines B1, B2 et B3. Si le premier et le second enroulement secondaire sont tels que l'enroulement primaire est entouré de part et d'autre par un des enroulements secondaires, alors un second écran métallique permet de séparer ce second enroulement secondaire de l'enroulement primaire. Ce second enroulement secondaire et ce second écran métallique peuvent également être présents dans les modes de réalisation des figures 1 et 2.

Plus généralement, il y aura autant d'écrans métalliques qu'il y a d'interface enroulement primaire / enroulement secondaire.

Selon un autre mode de réalisation, les isolants I1 et I2 sont réalisés à base de polyimide et d'aramide, plus particulièrement à base de Nomex et de Kapton, et encore plus particulièrement, ils sont réalisés en Trivoltherm (matériau commercialisé par la société KREMPEL GmbH).

Un exemple de mise en oeuvre est un écran E réalisé en cuivre (température de fusion de 1045 °C) d'épaisseur 0,2 mm entouré de deux couches d'isolants thermiques en Trivoltherm de 0,2 mm d'épaisseur. Les enroulements primaire P et secondaire S sont réalisés en feuillard d'aluminium (température de fusion de 648 °C) d'épaisseur comprise entre 0,1 mm et 0,4 mm.

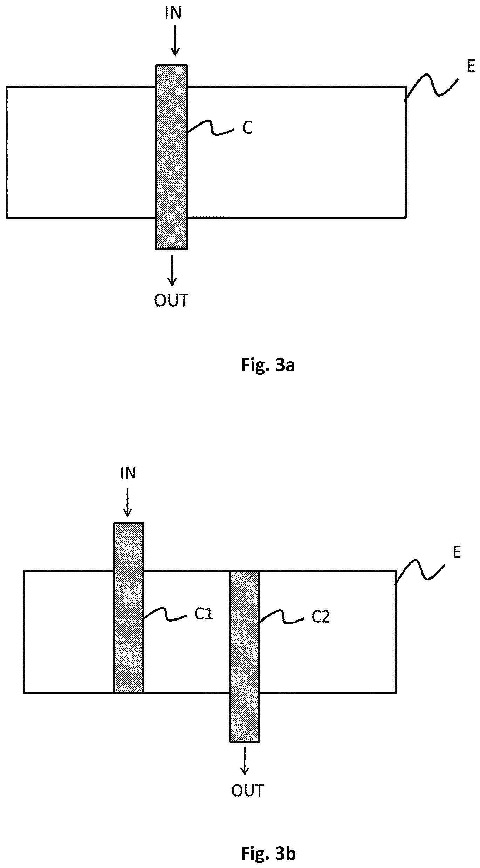

La figure 2 présente une coupe d'un transformateur selon un second mode de réalisation de l'invention, dans lequel les écrans E sont reliés entre eux en série. Dans ce mode de réalisation, les écrans présentent deux sorties pour pouvoir être mis en série les uns aux autres. L'intérêt de les mettre en série est de pouvoir réaliser des mesures de continuité en interne dans l'équipement pour vérifier la bonne connexion des écrans E entre eux et la bonne connexion des écrans E avec la masse électrique ME ou avec le potentiel neutre de l'enroulement primaire P ou encore avec la borne négative de l'équipement. De plus, la mise en série des écrans peut être faite par des connexions électriques présentant une entrée et une sortie de courant réalisées sur un même support ou sur des supports distincts (figures 3a et 3b).

Les figures 3a et 3b présentent respectivement une vue de l'écran E selon un quatrième et cinquième mode de réalisation.

La figure 3a présente notamment une vue de l'écran E déplié où la connexion électrique reliant les écrans E comprend une entrée IN et une sortie OUT en courant réalisées sur un même support C. Le support C est conducteur et est en contact électrique avec l'écran E. Donc si un défaut de connexion entre l'écran E et le support C apparaît, le courant pourra quand même circuler dans le support C entre l'entrée IN et la sortie OUT de la connexion électrique entre les écrans E, donc on ne pourra pas savoir si le défaut détecté par les mesures de courant vient d'un défaut de l'écran E ou d'un défaut entre le support C et l'écran E.

La figure 3b présente une vue de l'écran E déplié dans lequel l'entrée IN et la sortie OUT en courant sont réalisées sur des supports distincts. L'écran présente donc un premier support C1 pour l'entrée IN et un second support C2 pour la sortie OUT. Les supports C1 et C2 sont conducteurs et en contact électrique avec l'écran E. Les deux supports C1 et C2 peuvent être placés l'un à côté de l'autre ou opposés de 180° quand l'écran E est enroulé autour de la bobine. Il est également possible d'avoir l'entrée IN et la sortie OUT opposées, comme c'est le cas sur la figure 3b ou du même côté. Si un des supports C1 ou C2 présente un défaut de connexion avec l'écran E, par exemple le support C1 ou C2 n'est plus en contact électrique avec l'écran E, le courant ne pourra pas circuler entre l'entrée IN et la sortie OUT et on pourra donc détecter ce défaut contrairement à la connexion utilisant un seul support pour l'entrée IN et la sortie OUT de courant.

Comme précédemment, des systèmes de détection différentiel et/ou thermique du courant peuvent être utilisés pour détecter les courants en entrée des enroulements primaires ou à la masse ME afin de couper l'alimentation du transformateur T en cas de défaillance.

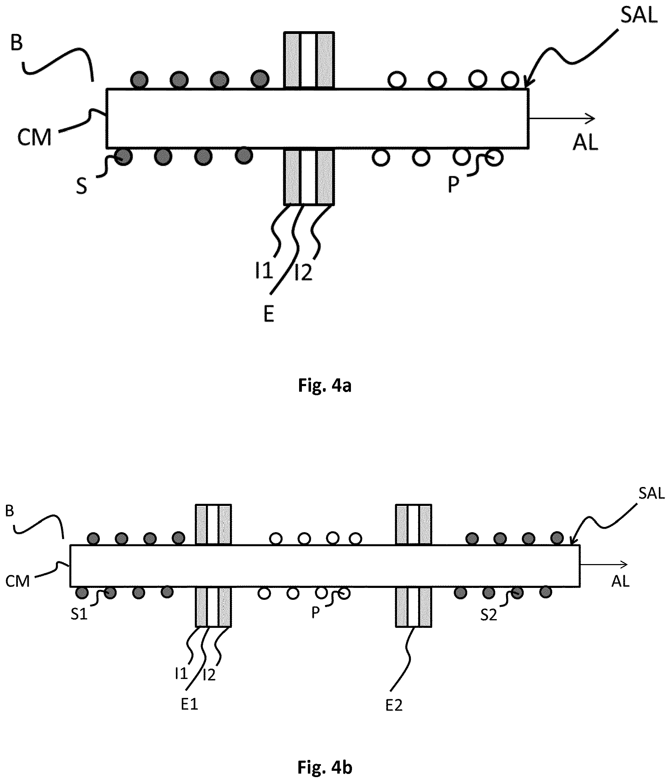

Les figures 4a et 4b présentent respectivement une bobine B selon un cinquième et un sixième mode de réalisation de l'invention. Dans ces deux figures, les enroulements primaire P et secondaires S sont juxtaposés sur une surface parallèle à l'axe longitudinal AL de la bobine B. Autrement dit, les enroulements primaire P et secondaires S sont enroulés selon le même axe AL et sont placés l'un à côté de l'autre sur cet axe AL. Les écrans E, E1 et E2 sont des cloisons perpendiculaires à cette surface et donc perpendiculaires au circuit magnétique CM de la bobine B et perpendiculaires à l'axe AL. Les écrans métalliques E, E1 et E2 séparent toujours les enroulements secondaires de l'enroulement primaire et peuvent être entourés de deux couches d'isolants thermiques I1 et I2.

Dans la figure 4a, les enroulements secondaires sont tous placés d'un même côté de l'écran E et l'enroulement primaire P de l'autre côté, alors que dans la figure 4b, l'enroulement primaire P entouré de deux écrans métalliques E1 et E2 sépare deux enroulements secondaires S1 et S2.

## Revendications

1. Transformateur électrique (T) comprenant :
- un premier enroulement, dit primaire (P) ;
- au moins un second enroulement, dit secondaire (S) ;
- des interrupteurs (INT) ; et
- un système de détection (DIS, SEC) de courant,
**caractérisé en ce que** le transformateur comprend au moins un écran métallique (E) ayant un point de connexion relié à un potentiel neutre de l'enroulement primaire ou destiné à être relié à une masse électrique (ME) et placé entre l'enroulement primaire (P) et le au moins un enroulement secondaire (S), l'écran (E) étant réalisé en un matériau conducteur électrique ayant une température de fusion supérieure à celle des matériaux constituant l'enroulement primaire (P) et le au moins enroulement secondaire (S) ;
**en ce que** l'enroulement primaire (P) comprend une entrée destinée à être reliée à une source d'énergie externe (ALIM), les interrupteurs (INT) sont placés à l'entrée de l'enroulement primaire (P) de manière à pouvoir isoler l'enroulement primaire (P) de la source d'énergie externe (ALIM) et **en ce que** le système de détection (DIS, SEC) de courant est configuré pour détecter un courant à l'entrée de l'enroulement primaire (P) ou un courant au point de connexion et est configuré pour fermer ou ouvrir les interrupteurs (INT) en fonction de la détection du courant, le système de détection étant différentiel ou thermique.

2. Transformateur électrique selon la revendication 1 dans lequel l'écran (E) et les enroulements primaire (P) et secondaire (S) sont concentriques.

3. Transformateur électrique selon la revendication 1 dans lequel les enroulements primaire (P) et secondaire (S) sont enroulés selon un même axe (AL) et l'écran (E) est perpendiculaire à ce même axe.

4. Transformateur électrique selon l'une des revendications précédentes, dans lequel les enroulements primaire (P) et secondaire (S) sont réalisés en alliage d'aluminium et l'écran (E) est réalisé en alliage de cuivre.

5. Transformateur électrique selon l'une des revendications précédentes comprenant également une première couche d'isolant thermique (I1), intercalée entre l'enroulement primaire (P) et l'écran (E), et une seconde couche d'isolant thermique (I2), intercalée entre l'écran (E) et l'enroulement secondaire (S), les matériaux constituant la première (I1) et la seconde (I2) couche d'isolant thermique étant résistants à une température supérieure à 400 °C.

6. Transformateur électrique selon la revendication 5 dans lequel les deux couches d'isolant thermique (I1, I2) sont réalisées à base de polyimide et d'aramide.

7. Transformateur électrique selon l'une des revendications 5 à 6, dans lequel une épaisseur d'un empilement de couches comprenant les deux couches d'isolant thermique (I1, I2) et l'écran (E) est comprise entre 0,60 mm et 1 mm.

8. Transformateur électrique (T) selon l'une des revendications précédentes, comprenant deux enroulements secondaires (S1, S2) et deux écrans métalliques (E1, E2), un premier (E1) des deux écrans est placé entre un premier des deux enroulements secondaires (S1) et l'enroulement primaire (P) et un second (E2) des deux écrans est placé entre l'enroulement primaire (P) et un second des deux enroulements secondaires (S2), les deux écrans (E1, E2) étant reliés électriquement en série ou en parallèle.

9. Transformateur électrique (T) selon la revendication 8 dans lequel les écrans (, E1, E2) sont reliés électriquement entre eux et au moins le point de connexion d'un des écrans est destiné à être relié directement sans passer par les autres écrans électriquement à la masse électrique (ME) ou est relié au potentiel neutre de l'enroulement primaire.

10. Transformateur électrique (T) selon la revendication 9 dans lequel au moins un des écrans (E) comprend deux connexions (IN, OUT) fixées à l'écran et distantes l'une de l'autre, une première des deux connexions (IN) étant reliée à un autre des écrans, une seconde des deux connexions (OUT) étant reliée soit à encore un autre des écrans, soit à un potentiel neutre de l'enroulement primaire ou soit est destinée à être reliée à une masse électrique (ME).

11. Transformateur électrique (T) selon la revendication 10 dans lequel la connexion électrique comprend au moins une barre conductrice mise en contact électrique avec au moins un écran (E).
